# EUROPÄISCHE PATENTSCHRIFT

(11) **EP 0 623 529 B1**
(45) Veröffentlichungstag und Bekanntmachung des Hinweises auf die Patenterteilung: **03.07.1996**
(21) Anmeldenummer: 94105004.9
(22) Anmeldetag: 30.03.1994
(51) Int. Cl.: B65G 15/14, B65G 21/20, F26B 15/22

(54) **Transportvorrichtung für Massenartikel**
Transporting device for mass produced articles
Transporteur pour articles de série

(30) Priorität: 03.05.1993 DE 4314438
(43) Veröffentlichungstag der Anmeldung: 09.11.1994
(73) Patentinhaber: Raupach, Dietmar, Dipl.-Ing., 33813 Oerlinghausen (DE)
(72) Erfinder: Raupach, Dietmar, Dipl.-Ing., D-33813 Oerlinghausen (DE)
(74) Vertreter: Stenger, Watzke & Ring Patentanwälte

(56) Entgegenhaltungen:
- EP-A- 0 100 427
- EP-A- 0 150 889
- DE-B- 1 292 071
- DE-U- 1 838 686
- DE-U- 1 902 470

## Beschreibung

Die Erfindung betrifft eine Transportvorrichtung für Massenartikel, insbesondere Emballagendeckel, zur Anwendung in einem Trockenofen zum Trocknen und/oder Gelieren von lackierten und/oder beschichteten Oberflächen, mit zwei im parallelen Abstand gegenüberliegenden und endlos umlaufenden Fördermittel, zwischen denen die Massenartikel von einer Aufgabe- zu einer Abgabestation einzeln in Aufnahmenuten geführt sind.

Aus der EP-A-0 100 427 ist eine Transportvorrichtung der gattungsgemäßen Art bekannt, bei der der Transport der Emballagendeckel mittels über Kettenräder paternosterartig endlos umlaufenden Förderketten erfolgt, an denen seitlich eine Vielzahl an Aufnahmetaschen mit Nuten zur Aufnahme der Deckel befestigt sind. Zur Sicherung der Deckel im Bereich der geraden Förderstrecken dient eine Vierpunktführung, die aus den seitlichen Aufnahmetaschen und zwei in 90-Grad-Anordnung ortsfesten Führungsstangen gebildet ist. Im Umlenkbereich der Förderketten stützen sich die Deckel mit einem Randbereich auf einer kreisbogenförmigen Stützfläche ab. In der Praxis neigt ein derartiges Fördersystem trotz einer zusätzlichen und technisch aufwendigen Förderkettenführung zur Instabilität, was sich nachteilig auf den gesamten Arbeitsablauf auswirken kann. Bei Störungen im Fördersystem, wie beispielsweise bei Deckelklemmung oder Längung eines Kettenstrangs, verhindert zudem die gemeinsame Lagerung der jeweils paarweise zugeordneten Kettenräder eines Förderstrangs das Nachspannen oder Auswechsseln eines einzelnen Kettenstrangs. Statt dessen müssen stets beide Kettenstränge mitsamt den daran befestigten Aufnahmetaschen demontiert und neu ausgerichet werden, was in der Regel unerwünscht hohe Standzeiten sowohl im Förder- als auch im Ofenbetrieb zur Folge hat.

Der im Anspruch 1 angegebenen Erfindung liegt das Problem zugrunde, durch einen vereinfachten Aufbau die Störanfälligkeit einer derartigen Transportvorrichtung zu verringern.

Die mit der Erfindung erzielten Vorteile bestehen insbesondere darin, daß an Stelle einer Vielzahl von Einzelteilen das Fördersystem lediglich aus zwei geführten Wellschläuchen mit Parallelwellung besteht, deren gute Formstabilität und Biegefähigkeit sich die Erfindung bei der Problemlösung zu eigen gemacht hat. Die Wellschläuche können bei Bedarf einzeln montiert und nachgespannt werden und sind somit, z.B. zwecks Aufnahme verschiedenst geformter Massenartikel, durch andere Wellschlauchpaare mit entsprechend angepaßter Wellenteilung schnell und einfach auszutauschen. Infolge der in weitgehend geschlossenen Führungsbahnen gleitenden Fördermittel kann der Transport der Massenartikel zudem sowohl vertikal als auch horizontal erfolgen, ohne daß auf den Förderstrecken, insbesondere im Bereich eines kreisbogenförmigen Umlaufs, zusätzliche Maßnahmen zur Sicherung und Abstützung der Massenartikel erforderlich sind. Da das Fördersystem außerdem ohne jegliche Schmierung auskommt, eignet sich die erfindungsgemäße Transportvorrichtung besonders für solche Massenartikel, die im Getränke- und Lebensmittelbereich zum Einsatz kommen.

Vorteilhafte Ausgestaltungen der Erfindung sind in weiteren Ansprüchen angegeben.

Im folgenden wird die Erfindung anhand der Zeichnungen beispielshalber näher erläutert. Es zeigen:
- Fig. 1: einen Längsschnitt durch die erfindungsgemäße Transportvorrichtung entlang der Linie I-I in Fig. 2 in schematischer Darstellung;
- Fig. 2: eine Schnittansicht entlang der Linie II-II in Fig. 1;
- Fig. 3: eine schematische Teilansicht eines Wellschlauchpaares mit dazwischen eingelagerten Deckeln;
- Fig. 4: eine Schnittansicht entlang der Linie IV-IV in Fig 1 in vergrößerter Darstellung;
- Fig. 5: eine Schnittansicht entlang der Linie V-V in Fig. 1 in vergrößerter Darstellung;
- Fig. 6: einen Längsschnitt durch eine Wellschlauchverbindung;
- Fig. 7: einen Längsschnitt durch eine weitere Wellschlauchverbindung, und
- Fig. 8: einen Schnitt durch eine weitere Ausführungsform einer Führung für den Wellschlauch mit einem sechskantigen Innenprofil.

Die erfindungsgemäße Vorrichtung ist ausgelegt für den Transport von lackierten und/oder mit Dichtmassen versehenen Deckel 10, die zum Trocknen und/oder Gelieren der lackierten und/oder beschichteten Oberflächen einen strich-punktiert angedeuteten gas- oder elektrisch beheizbaren Industrieofen 11, z.B. Turmofen, durchlaufen. Die Transportvorrichtung weist zu diesem Zweck zwei im parallelen Abstand gegenüberliegende und endlos umlaufende Wellschläuche 12, 13 auf, zwischen denen die Deckel 10 in Säulenform von einer Aufgabestaion 14 zu einer Abgabestation 15 paternosterartig über mindestens eine aufwärtsgehende und mindestens eine abwärtsgehende Förderstrecke 16, 17 transportiert werden. An die vertikalen Förderstrecken 16, 17 schließt ein bogenförmiger Umlauf an, der in einen horizontalen Streckenbereich übergeht.

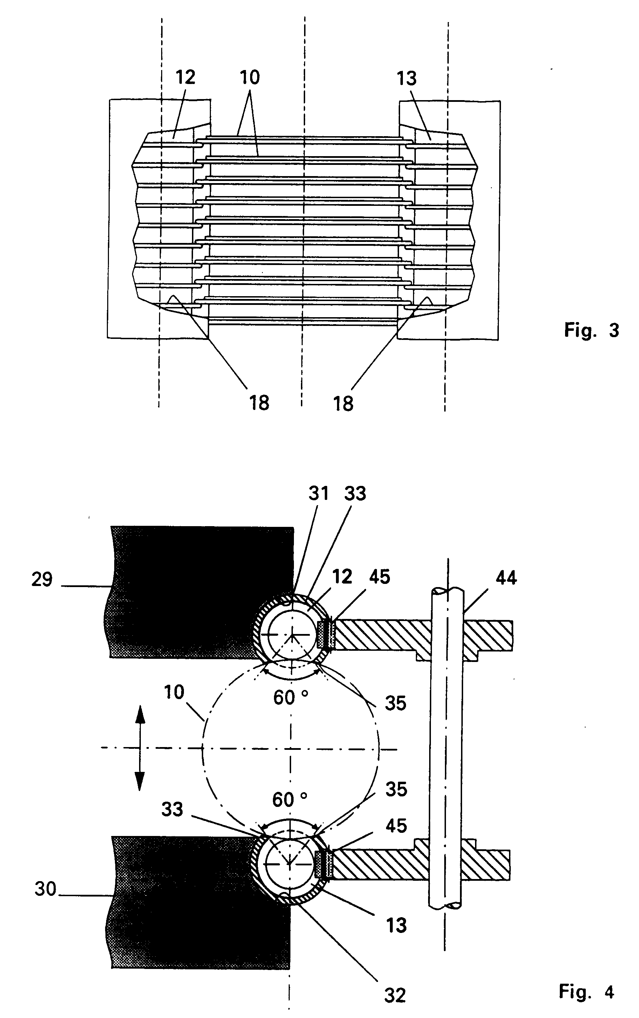

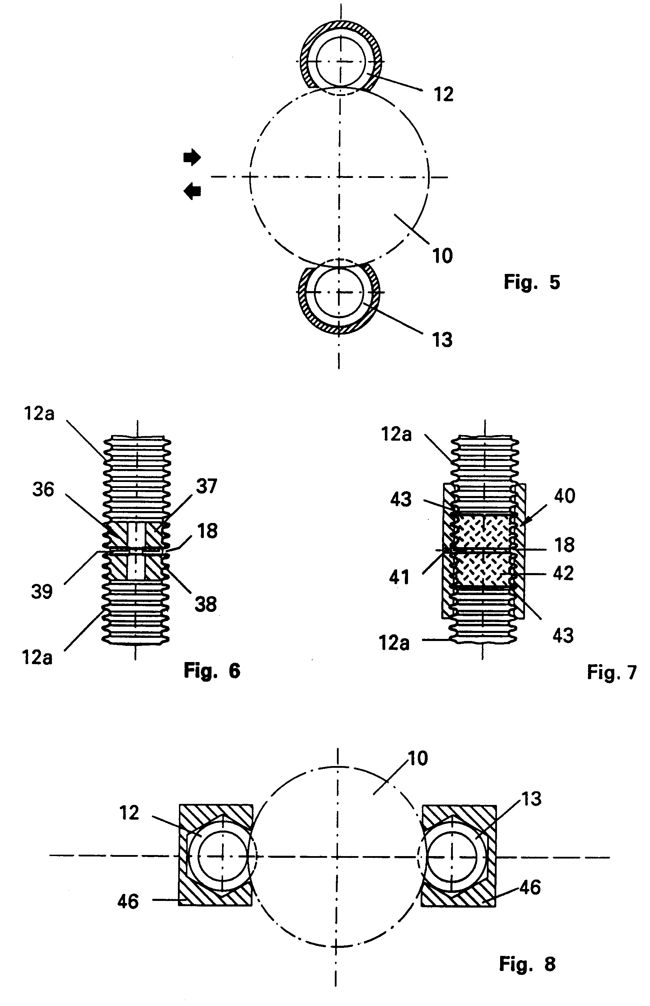

Wie insbesondere aus Fig. 3 zu erkennen ist, sind die Wellschläuche 12, 13 parallel und im wesentlichen geradflankig gewellt und derart zueinander ausgerichtet, daß die Wellentäler den einzelnen Deckeln 10 als Aufnahmenuten 18 dienen. Somit ist gewährleistet, daß innerhalb der Deckelsäule die Deckel 10 untereinander einen gleichbleibenden Abstand einhalten. Die Wellschläuche 12, 13, die vorzugsweise aus Edelstahl oder Teflon hergestellt sind, setzen sich jeweils aus einzelnen Wellschlauchstücken zusammen, die in einer anhand der Fig. 6 und 7 später noch näher zu beschreibenden Weise zu einem endlosen Fördermittel miteinander verbunden werden.

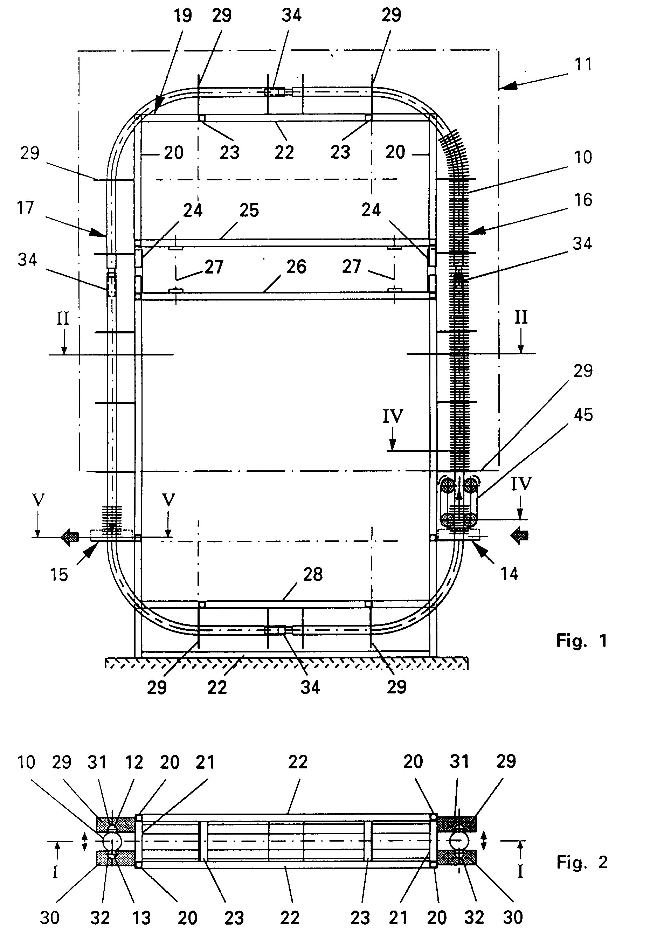

In der Grundausführung gem. Fig. 1 und 2 sind die Förderstrecken unter Zuhilfenahme eines stabilen und fest mit dem Untergrund verbundenen Rahmengestells 19 aufgebaut, dessen vier senkrechte Stützen 20 durch seitliche Quer- und Längsträger 21, 22 miteinander verbunden sind. Die Längsträger 22 sind im Decken- und Bodenbereich durch weitere Querträger 23 zusätzlich verstärkt. Die Stützen 20 sind im oberen Drittel zweigeteilt und werden durch einen Schiebesitz 24 zusammengehalten. Unter- und oberhalb des Schiebesitzes 24 sind zusätzliche Zwischenträger 25, 26 vorgesehen, die innen an den Stützen 20 angreifen und untereinander über insgesamt vier Gewindestangen 27 in Verbindung stehen. Zwei weiterere Zwischenträger 28 sind in Bodennähe im unteren Bereich des Rahmengestells 19 vorgesehen. Mit Hilfe der Schiebesitze 24 läßt sich das Rahmengestell 19 in der Höhe verstellen, so daß auf diese Weise die Spannung der beiden am Rahmengestell geführten Wellschläuche 12, 13 eingerichtet werden kann. Die Höhenverstellung der Stützen 20 erfolgt mit Hilfe der Gewindestangen 27, an deren Stelle auch ferdernde Elemente eingesetzt werden können.

Zu beiden Seiten der Stützen 20 sowie an den oberen Längsträgern 22 sind in geeigneten Abständen eine Reihe von Halteplatten 29, 30 vorgesehen, die sich paarweise in einer zur Außenfläche des Rahmengestells 19 senkrechten Ebene nach außen erstrecken und in der Ebene verschiebar an dem Rahmengestell 19 befestigt sind. In Bodennähe des Rahmengestells 19 sind entprechend ausgerichtete und verschiebbare Halteplatten 29, 30 an den beiden Zwischenträgern 28 angeordnet. Jede Halteplatte 29, 30 weist in gleichem Abstand zum angrenzenden Rahmengestell und gegenüberliegender Anordnung eine kreisförmige Aussparung 31, 32 auf, die von der inneren Plattenkante segmentartig begrenzt ist. Bei gleichbleibendem Abstand zwischen zwei in einer Ebene befindlichen Halteplatten 29, 30 sind deren Aussparungen 31, 32 mit den betreffenden Aussparungen der nachfolgenden Halteplatten axial ausgerichtet und bilden somit eine das Rahmengestell in gleichbleibendem Abstand umlaufende Fluchtlinie.

Wie insbesondere anhand Fig. 4 zu erkennen ist, ist in den Aussparungen 31, 32 einer Reihe der Halteplatten 29, 30 ein den endlos umlaufenden Wellschläuchen 12, 13 als Führung dienendes Rohr 33 eingepaßt. Das Rohr 33, das aus dem gleichen oder ähnlichen Material wie der Wellschlauch hergestellt sein kann, setzt sich aus mehreren Rohrstücken zusammen, die mittels Schiebesitzverbindungen 34 zu einem geschlossenen System zusammengefügt sind. Die Schiebesitzverbindungen 34 sind aus wärmetechnischen Gründen vorgesehen und zweckmäßigerweise derart angeordnet, daß in einem geraden Förderstreckenbereich jeweils mindestens eine Verbindungsstelle angeordnet ist. Das Rohr 33 ist im Öffnungsbereich der Aussparung 31, 32 mit einem Längsschlitz 35 versehen, dessen freier Öffnungsquerschnitt ein Bogenmaß von vorzugsweise 60 Grad besitzt. Der in das Rohr 33 gleitend eingepaßte Wellschlauch 12, 13 ragt im Öffnungsbereich des Längsschlitzes 32 mit seiner gewellten Mantelfläche über die Innenkante der Halteplatte 29, 30 hinaus und ermöglicht somit, daß die Deckel 10 sich mit einem Randbereich an den gegenüberliegenden Wellschläuchen 12, 13 abstützen können. Der Öffnungsquerschnitt des Längsschlitzes 35 ist dabei so bemessen, daß der Bewegungsspielraum der Deckel 10 innerhalb des Abstützbereichs begrenzt ist. In Höhe der Aufgabe- und Abgabestation 14, 15 ist der Längsschlitzes 35 eingangs- und ausgangsseitig erweitert, um das Ein- und Ausführen der Deckel 10 zu ermöglichen (Fig. 5)

In den Fig. 6 und 7 sind zwei Möglichkeiten dargestellt, um einzelne Wellschlauchstücke zu einem endlosen Fördermittel miteinander zu verbinden. In beiden Fällen werden die ausgerichteten Schlauchenden 12a in einem Abstand aneinandergefügt, der einem Wellental bzw. der Breite einer Aufnahmenut 18 entspricht. Bei der Darstellungsart nach Fig. 6 erfolgt die Verbindung mittels einer Klemmeinrichtung 36, die aus zwei halbschalenförmigen Elementen 37, 38 besteht, deren bogenförmiges Außenprofil dem Innenprofil des Wellschlauchs 12, 13 angepaßt ist. Beide Elemente 37, 38 sind z.B. mittels eines Gewindestiftes 39 formschlüssig miteinander verbunden. Bei der Wellschlauchverbindung nach Fig. 7 werden die Schlauchenden 12a mit Hilfe einer außen anliegenden Passform 40 mit einer Spritzbohrung 41 ausgerichtet und der Innenraum der Rohrenden mit einem aushärtbaren Material 42 ausgeschäumt, nachdem er zuvor durch seitliche Trennwände 43 abgedichtet worden ist.

Wie insbesondere in der Schnittdarstellung gem. Fig. 4 zu erkennen ist, werden beide Wellschläuche 12, 13 über eine Welle 44 und vorzugsweise mittels eines doppelverzahnten Zahnriemens 45 synchron mit einer Geschwindigkeit angetrieben, die auf die Zuführgeschwindigkeit der Aufgabestation 14 und die Abführgeschwindigkeit der Abgabestation 15 abgestimmt ist. Für den Antrieb, der zweckmäßigerweise außerhalb des Trockenofens 11 erfolgt (Fig. 1), ist das Rohr 33 in einer 90-Grad-Anordnung zur Deckelsäule entsprechend ausgespart, damit der Zahnriemen 45 unmittelbar in den Wellschlauch 12, 13 eingreifen kann. Als Signalgeber für eine mögliche taktweise Bewegungssteuerung der Wellschläuche 12, 13 ist vorzugsweise eine Lichtschrankeneinrichtung (nicht dargestellt) vorgesehen.

Es liegt im Rahmen der Erfindung, mehrere aufwärts- und abwärtsgehende Förderstrecken hintereinanderzuschalten oder die Förderstrecken insgesamt horizontal auszurichten. Im letzteren Fall lassen sich auch Massenartikel in unterschiedlichster Gestaltung ohne großen Änderungsaufwand transportieren, indem bei nach oben offener Wellschlauchführung geeignete Trägerelemente in die Aufnahmenuten eingelegt werden, an denen die Massenartikel z.B. angehängt werden können.

Anhand der Fig. 8 soll schließlich gezeigt werden, daß es ferner auch denkbar ist, die Aussparungen in den Halteplatten als eine durchgehend massive Führung 46 auzubilden, die den Wellschlauch 12, 13 ohne Zwischenschaltung eines Rohres direkt aufnimmt und deren Innenprofil sechskantig ausgebildet ist. Die Form des Innenprofils ist weitgehend beliebig gestaltbar und kann sogar im Verlauf einer Förderstrecke Unterschiede aufweisen, solange durch eine ausreichende Anzahl an Berührungspunkten zwischen Wellschlauch und Hohlkörper für eine sichere Wellschlauchführung gesorgt ist. Um Massenartikel unterschiedlicher Ausmaße befördern zu können, sind die massiven Führungen 46 in ähnlicher Weise wie die Halteplatten 29, 30 verschiebbar an dem Rahmengestell befestigt.

### Bezugszeichenliste

- 10: Deckel
- 11: Ofen
- 12,13: Wellschlauch
- 12a: Wellschlauchende
- 14: Aufgabestation
- 15: Abgabestation
- 16: Förderstrecke, aufwärts
- 17: Förderstrecke, abwärts
- 18: Aufnahmenut
- 19: Rahmengestell
- 20: Stütze
- 21,23: Querträger
- 22: Längsträger
- 24: Schiebesitz
- 25,26,28: Zwischenträger
- 27: Gewindestange
- 29,30: Halteplatte
- 31,32: Aussparung
- 33: Führung, Rohr
- 34: Schiebesitzverbindung
- 35: Längsschlitz
- 36: Klemmeinrichtung
- 37,38: Element, schalenförmig
- 39: Gewindestift
- 40: Passform
- 41: Spritzbohrung
- 42: Material
- 43: Trennwand
- 44: Welle
- 45: Zahnriemen
- 46: Führung, massiv

## Patentansprüche

1. Transportvorrichtung für Massenartikel, insbesondere Emballagendeckel, zur Anwendung in einem Trockenofen zum Trocknen und/oder Gelieren von lackierten und/oder beschichteten Oberflächen, mit zwei im parallelen Abstand gegenüberliegenden und endlos umlaufenden Fördermittel, zwischen denen die Massenartikel von einer Aufgabe- zu einer Abgabestation einzeln in Aufnahmenuten geführt sind, dadurch gekennzeichnet, daß jedes Fördermittel aus einem Wellschlauch (12, 13) mit einer Parallelwellung besteht, die zur Ausbildung der Aufnahmenuten (18) im wesentlichen geradflankig ausgebildet ist und daß jeder Wellschlauch (12, 13) in einer rohrförmigen und seitlich offenen Führung (33) gleitet.

2. Transportvorrichtung nach Anspruch 1, dadurch gekennzeichnet, daß die Führung als ortsfestes Rohr (33) mit einem Längsschlitz (35) ausgebildet ist, dessen freier Öffnungsquerschnitt ein Bogenmaß von vorzugsweise 60 Grad aufweist.

3. Transportvorrichtung nach einem der Ansprüche 1 oder 2, dadurch gekennzeichnet, daß die seitliche Öffnung der Führung (33) im Bereich der Aufnahme- und Abgabestation (14, 15) eingangs- und ausgangsseitig erweitert ist.

4. Transportvorrichtung nach einem der Ansprüche 1-3, dadurch gekennzeichnet, daß der Wellschlauch (12, 13) aus einem wärmebeständigen Material besteht, vorzugsweise Edelstahl oder Teflon.

5. Transportvorrichtung nach einem der Ansprüche 1-4, dadurch gekennzeichnet, daß der Antrieb des Wellschlauchs (12, 13) über einen doppelverzahnten Zahnriemen (45) oder ein Ritzel mit Wellschlauchprofil erfolgt.

6. Transportvorrichtung nach einem der Ansprüche 1-5, dadurch gekennzeichnet, daß als Signalgeber für eine mögliche taktweise Bewegungssteuerung der Wellschläuche (12, 13) eine Lichtschranke vorgesehen ist.

7. Transportvorrichtung nach einem der Ansprüche 1-6, dadurch gekennzeichnet, daß die Enden des Wellschlauchs (12, 13) im Bereich der Endlosverbindung mittels einer Klemmeinrichtung (36) miteinander verbunden sind, die aus zwei an der Innenwandung der Wellschlauchenden anliegenden halbschalenförmigen Elementen (37, 37) besteht.

8. Transportvorrichtung nach einem der Ansprüche 1-6, dadurch gekennzeichnet, daß die Enden des Wellschlauchs (12, 13) im Bereich der Endlosverbindung mit einem aushärtbaren Material (42) ausgeschäumt sind.

9. Transportvorrichtung nach Anspruch 1-8, dadurch gekennzeichnet, daß der Abstand zwischen den eine Förderstrecke bildenden Führungen (33) veränderbar ist.

## Claims

1. Transport apparatus for mass-produced articles, especially packing-case lids, for use in a drying oven for the drying and/or gelling of lacquered and/or coated surfaces, with two endlessly rotating conveying means which are located at a distance opposite and parallel to one another and between which the mass-produced articles are guided individually in receiving grooves from a feed station to a discharge station, characterized in that each conveying means consists of a corrugated hose (12, 13) with a parallel corrugation which is designed to be essentially straight-flanked in order to form the receiving grooves (18), and in that each corrugated hose (12, 13) slides in a tubular and laterally open guide (33).

2. Transport apparatus according to Claim 1, characterized in that the guide is designed as a fixed tube (33) with a longitudinal slot (35), the free orifice cross-section of which has an arc dimension of preferably 60 degrees.

3. Transport apparatus according to one of Claims 1 or 2, characterized in that the lateral orifice of the guide (33) is widened on the entry and exit sides in the region of the reception and discharge station (14, 15).

4. Transport apparatus according to one of Claims 1-3, characterized in that in that the corrugated hose (12, 13) consists of a heat-resistant material, preferably high-grade steel or Teflon.

5. Transport apparatus according to one of Claims 1-4, characterized in that the corrugated hose (12, 13) is driven via a double-toothed toothed belt (45) or a pinion having a corrugated-hose profile.

6. Transport apparatus according to one of Claims 1-5, characterized in that a light barrier is provided as a signal generator for a possible intermittent movement control of the corrugated hoses (12, 13).

7. Transport apparatus according to one of Claims 1-6, characterized in that the ends of the corrugated hose (12, 13) are connected to one another in the region of the endless connection by means of a clamping device (36) which consists of two halfshell-shaped elements (37, 37) bearing against the inner wall of the corrugated-hose ends.

8. Transport apparatus according to one of Claims 1-6, characterized in that the ends of the corrugated hose (12, 13) are foam-filled with a curable material (42) in the region of the endless connection.

9. Transport apparatus according to Claims 1-8, characterized in that the distance between the guides (33) forming a conveying stage is variable.

## Revendications

1. Dispositif de transport pour articles de grande série, notamment des couvercles d'emballage, destiné à être utilisé dans un four de séchage pour sécher et/ou gélifier des surfaces laquées et/ou revêtues, le dispositif de transport comprenant deux moyens de transport en regard l'un de l'autre en étant espacés parallèlement l'un de l'autre, en révolution sans fin, et entre lesquels les articles de grande série logés individuellement dans des rainures de réception, sont conduits d'un poste de chargement jusqu'à un poste d'évacuation, caractérisé en ce que chaque moyen de transport est constitué d'un d'tuyau ondulé (12, 13) à ondulation parallèle, qui pour réaliser les rainures de réception (18) est sensiblement à flancs droits, et en ce que chaque tuyau ondulé (12, 13) glisse dans un guidage (33) de forme tubulaire et ouvert latéralement.

2. Dispositif de transport selon la revendication 1, caractérisé en ce que le guidage est réalisé sous la forme d'un tube (33) en position fixe, comportant une fente longitudinale (35) dont la section d'ouverture libre présente une mesure d'arc de préférence de 60°.

3. Dispositif de transport selon l'une des revendications 1 ou 2, caractérisé en ce que l'ouverture latérale du guidage (33), dans la région des postes de chargement et d'évacuation (14, 15), est élargie côté entrée et côté sortie.

4. Dispositif de transport selon l'une des revendications 1 - 3, caractérisé en ce que le tuyau ondulé (12, 13) est réalisé en un matériau résistant à la chaleur, de préférence de l'acier spécial ou du polytétrafluoroéthylène.

5. Dispositif de transport selon l'une des revendications 1 - 4, caractérisé en ce que l'entraînement du tuyau ondulé (12, 13) s'effectue par l'intermédiaire d'une courroie crantée (45) à denture double, ou bien d'un pignon à profil de tuyau ondulé.

6. Dispositif de transport selon l'une des revendications 1 - 5, caractérisé en ce qu'en guise de générateur de signal pour une possible commande de mouvement cyclique des tuyaux ondulés (12, 13), on prévoit une barrière photo-électrique.

7. Dispositif de transport selon l'une des revendications 1 - 6, caractérisé en ce que les extrémités du tuyau ondulé (12, 13) sont reliées l'une à l'autre, dans la zone de la liaison de continuité, au moyen d'un système de serrage (36), qui est constitué de deux éléments (37, 37) en forme de demi-coquille s'appuyant sur la paroi intérieure des extrémités de tuyau ondulé.

8. Dispositif de transport selon l'une des revendications 1 - 6, caractérisé en ce que les extrémités du tuyau ondulé (12, 13) sont remplies, dans la zone de la liaison de continuité, d'une mousse en un matériau susceptible de durcir.

9. Dispositif de transport selon l'une des revendications 1 - 8, caractérisé en ce que la distance entre les guidages (33) formant un parcours de transport, peut être modifiée.
